# EUROPÄISCHE PATENTSCHRIFT

(11) **EP 2 130 162 B1**
(45) Veröffentlichungstag und Bekanntmachung des Hinweises auf die Patenterteilung: **03.04.2019**
(21) Anmeldenummer: 08734475.0
(22) Anmeldetag: 04.04.2008
(51) Int. Cl.: B42D 25/00

(54) **DOKUMENT MIT DISPLAY-MODUL**
DOCUMENT COMPRISING A DISPLAY MODULE
DOCUMENT COMPRENANT UN MODULE D'AFFICHAGE

(30) Priorität: 04.04.2007 DE 102007016777
(43) Veröffentlichungstag der Anmeldung: 09.12.2009
(73) Patentinhaber: Bundesdruckerei GmbH, 10958 Berlin (DE)
(72) Erfinder: PFLUGHOEFFT, Malte, 13347 Berlin (DE); FISCHER, Jörg, 13053 Berlin (DE); PAESCHKE, Manfred, 13347 Berlin (DE); BEYER-MEKLENBURG, Günter, 16816 Neuruppin (DE); DRESSEL, Olaf, 14641 Wustermark (DE); LEOPOLD, André, 10119 Berlin (DE)
(74) Vertreter: Mammel und Maser
(86) Internationale Anmeldenummer: PCT/DE2008/000594
(87) Internationale Veröffentlichungsnummer: WO 2008/122282

(56) Entgegenhaltungen:
- EP-A- 0 485 366
- EP-A- 0 845 695
- EP-A- 1 411 467
- WO-A-96/15912
- DE-A1- 10 248 394
- DE-A1- 10 338 732

## Beschreibung

### Gebiet der Erfindung

Die Erfindung betrifft Wert- oder Sicherheitsdokumente, wie z.B. Personalausweise, Reisepässe, Führerscheine, Zutrittskarten, Berechtigungsausweise, Telefonkarten, Krankenkassenkarten, Kreditkarten, Schecckarten oder Sicherheitsausweise mit einem Displaymodul, sowie Verfahren zu ihrer Herstellung.

### Stand der Technik und Hintergrund der Erfindung

Aus dem Stand der Technik sind Dokumente des Wert- und Sicherheitsdrucks, zum Beispiel ein Personalausweis, ein Reisepass, ein Führerschein, eine Zutrittskarte, ein Berechtigungsausweis oder eine Kreditkarte, mit einem Display bekannt (z.B. WO 2004/080100, EP 0920675, US 6,019,284, US 6,402,039, WO 99/38117). Insbesondere können diese als kartenförmige Dokumente ausgeführt sein und können DisplayElemente diverser Bauweise, zum Beispiel eine elektrophoretische Anzeige, eine elektrochrome Anzeige, eine Drehelementanzeige, eine LED-Anzeige, insbesondere eine anorganische, organische oder Hybrid-LED-Anzeige, eine LCD-Anzeige in den verschiedenen Ausführungsformen (zum Beispiel twisted nematic, super twisted nematic, cholesterisch, nematisch), eine ferroelektrische Anzeige, eine Anzeige auf der Basis des Elektrowettingeffektes, eine Anzeige auf Basis eines flexiblen Displays der Firma Citala oder eine Hybridanzeige, enthalten. Das Display kann hierbei als Segmentanzeige, Passivmatrix oder Aktivmatrix ausgebildet sein. Aus der DE 103 38 732 A1 ist ein kartenförmiger Mehrschichtverbund bekannt. Einzelne Schichten des kartenförmigen Datenträgers werden im Laserdurchstrahlverfahren miteinander verbunden. Gleichzeitig kann ein Funktionselement in einer Kavität im Kartenverbund positioniert und mittels Laserdurchstrahlverfahren in der Kavität fixiert werden.

Durch die Einführung der ICAO-9303-Norm für maschinen-lesbare Reisedokumente auf Basis der ISO 14443 A/B, also des RF-Kommunikationsstandards für Reisedokumente, werden weltweit Reisepässe mit Antennenspulen und einem kryptographischen Chip ausgegeben. Kartenförmige Dokumente (ID-1) des Wert- und Sicherheitsdrucks werden im Allgemeinen mittels Lamination aus einem Schichtverbund mehrerer Folien, mindestens zwei, bevorzugt sieben bis zehn, hergestellt, um verschiedene Sicherheitselemente in verschiedenen Lagen des Dokuments zu positionieren. Sicherheitskarten bestehen nach dem Stand der Technik aus wenigstem einem Kunststoff mit hoher Erweichungstemperatur, welche größer 100 °C, bevorzugt größer 120 °C, besonders bevorzugt größer 140 °C liegt. Diese sind besonders bevorzugt monolithisch aus einem Material aufgebaut, können aber auch verschiedene Materialien enthalten. Hierbei kommen vor allem Polyethylentherephthalat und dessen Derivate sowie besonders bevorzugt Polycarbonat, insbesondere Bisphenol-A-Polycarbonat, zum Einsatz. Entsprechende Kartenaufbauten sind dem Fachmann aus dem Stand der Technik vertraut. Weitere Materialien, die zum Einsatz kommen, sind die einschlägig bekannten thermoplastisch verarbeitbaren Kunststoffe wie Polyvinylchlorid, Acrylnitril-Butadien-Styrol, oder Verbundmaterialien wie Teslin.

### Technisches Problem der Erfindung

Die zur Herstellung eines solchen kartenförmigen Dokuments notwendigen Prozessparameter sind jedoch derart, dass einzubettende elektronische Bauteile und insbesondere empfindliche Komponenten, wie zum Beispiel ein Display, aufgrund der hohen Temperaturen und Prozessdrücke zerstört werden. Des Weiteren sind die elektronischen Komponenten im Verhältnis zu dem Kartenkörper teurer, so dass Fehler in der Produktion der Karte zum Verlust teurer elektronischer Komponenten führen.

### Grundzüge der Erfindung und bevorzugte Ausführungsformen

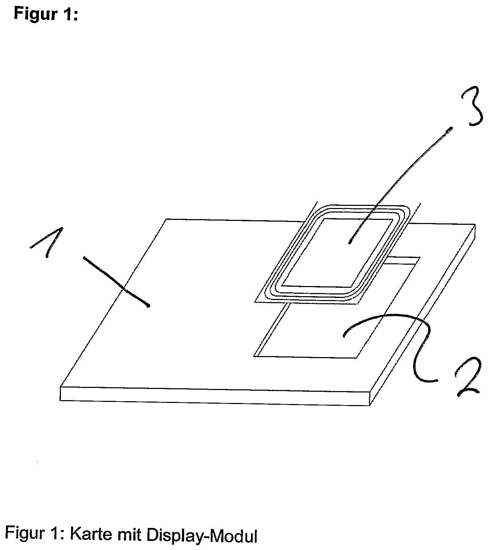

Um diese Probleme nach dem Stand der Technik zu lösen, werden Kartenkörper gemäß dem Stand der Technik zur Herstellung für Dokumente des Wert- und Sicherheitsdrucks sowie das elektronisch funktionelle Modul getrennt hergestellt, bevorzugt beide getrennt getestet und anschließend miteinander verbunden. Hierzu wird in den Dokumentenrohling (1) eine Kavität (2) gefräst oder, wie weiter unten beschrieben, ausgestanzt oder bei der Lamination eingebracht. Anschließend erfolgt eine Implantation des Displaymoduls (3), wie in Figur 1 schematisch zu sehen. Dies hat den Vorteil, dass hier bereits geprüfte Komponenten zusammengefügt werden können und eine hohe Prozessausbeute erreicht werden kann.

Das Displaymodul (3) kann unabhängig vom Kartenkörper (1) bevorzugt über Vergießen, Spritzguss, Spritzpressen oder andere dem Fachmann bekannte Techniken hergestellt werden. Das Modul ist elektrisch vollständig und funktionell und enthält alle notwendigen Komponenten, insbesondere die Antenne für Energieversorgung und Kommunikation, den Prozessor und den Treiber (ein- oder zwei-Chip-Lösung), die Display-Ansteuerung sowie das Display-Element. Beim Displayelement kann es sich um eine segmentierte Anzeigevorrichtung handeln, beispielsweise eine Anzeigevorrichtung mit der Möglichkeit der direkten elektrischen Adressierung einzelner Displaysegmente. Nach einer weiteren Ausführungsform handelt es sich bei der Anzeigevorrichtung um eine Aktiv- oder Passivmatrix. Beim Displayelement kann es sich um eine elektrophoretische Anzeige, elektrochrome Anzeige, Drehelementanzeige, LED-Anzeige, insbesondere anorganische LED- oder organische LED-Anzeige (OLED), LCD-Anzeige in den verschiedenen Ausführungsformen (twisted nematic, super twisted nematic, cholesterisch, nematisch, ferroelektrisch), Anzeige auf der Basis des Elektrowettingeffektes, eine Anzeige auf Basis eines flexiblen Displays der Firma Citala oder eine Hybridanzeige handeln.

In einer bevorzugten Ausbildung des Displays wird eine bistabile Anzeige gewählt, insbesondere eine elektrophoretische oder DrehelementAnzeige, oder eine semi-bistabile Anzeige, wie zum Beispiel eine elektrochrome Anzeige. Hierbei bleibt der angezeigte Displayinhalt auch ohne das Vorhandensein des elektrischen Feldes noch bestehen.

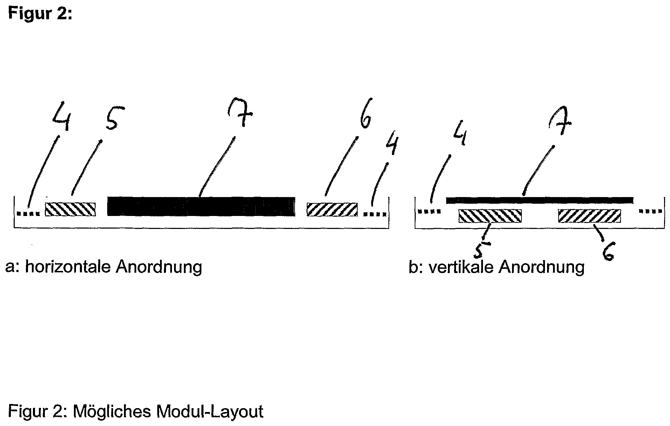

Darüber hinaus kann das Display-Modul weitere Elemente enthalten, z.B. ein Kontaktpad für kontaktbehaftete Kommunikation und Energieversorgung, Schnittstellen für die Modulprüfung sowie Sicherheitselemente. Ein mögliches Display-Modul-Layout ist in Figur 2 gezeigt mit einer Antenne mit vier Windungen (4), einem RF-Chip (5), z.B. einem Kryptoprozessor, einem Treiber-IC (6) und dem aktiven Display-Element (7). Elektrische Verbindungen sind in dieser schematischen Zeichnung / Querschnitt nicht enthalten. Hierbei können die elektronischen Komponenten auf einer oder mehreren Ebenen angeordnet sein. Bevorzugt sind eine horizontale Anordnung nebeneinander für besonders flache Module sowie eine vertikale Anordnung für besonders kompakte Module.

Eine einfache Einbringung eines Displaymoduls ist aus dem Stand der Technik bekannt, z.B. mittels Verkleben. Das Modul kann auch eine Hinterschneidung aufweisen, so dass sich zusätzlich ein mechanischer Halt zwischen Karte und Modul ergibt. Aufgrund der Empfindlichkeit des Displays, dessen Größe und seines im Vergleich zum Kartenkörper anderen Ausdehnungs- und Biegeverhaltens, sind jedoch zusätzliche Mittel zur sicheren Verbindung mit dem Dokumentenkörper notwendig.

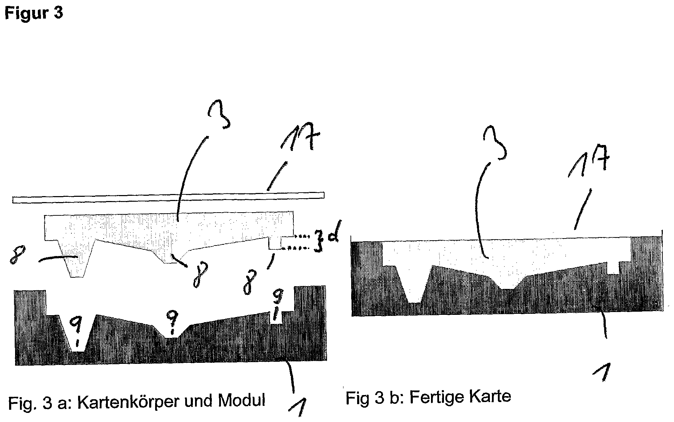

Erfindungsgemäß wird das Problem gelöst, indem das Display-Modul auf der Unterseite eine Struktur in Form von mehreren Erhebungen mit einer Höhe (d) von mindestens 3 µm aufweist und eine Struktur im Kartenkörper vorhanden ist, welche komplementär zur Struktur des Display-Moduls ist. Insbesondere sind Erhebungen (8) vorgesehen, welche eine Strukturhöhe (d) von mehr als 3 µm, bevorzugt mehr als 5 µm, aufweisen. Auf diese Weise werden zum einen die Oberfläche zwischen Modul und Kartenkörper vergrößert, so dass die Haftung verbessert, zum anderen der mechanische Kontakt, insbesondere bei Verbiegung und Scherbelastung, verbessert wird. Hierzu weist das Display-Modul Erhebungen auf der Unterseite (8) auf, welche in eine entsprechend komplementäre Struktur im Kartenkörper greift, wobei die komplementäre Struktur in Form von Vertiefungen (9) entweder bereits existiert oder sich durch den Prozess formt. Dieses ist schematisch an einem exemplarischen Profil in Figur 3 gezeigt. Zusätzlich kann eine Sicherheitsfolie (17) aufgebracht werden.

Bevorzugt ist für ein Sicherheits- oder Wertdokument vorgesehen, dass der Kartenkörper ein oder mehrere Lagen aus thermoplastisch verarbeitbaren Kunststoffen enthält, wobei der thermoplastisch verarbeitbare Kunststoff Polycarbonat, Polyethylentherephtalat und dessen Derivate, thermoplastisches Polyurethan, Polyvinylchlorid, Acrylnitril-Butadien-Styrol, oder Verbundmaterialien wie Teslin enthält.

Der Vorteil liegt darin, dass der Herstellprozess des Dokumentes, insbesondere eines Hochsicherheitsdokumentes auf Basis von mehreren Sicherheitsfolien aus Polycarbonat, so erfolgen kann, wie dies bereits heute geschieht, also mittels Laminiertechnik in einer Heiz-Kühl-Presse bei einer Temperatur bis zu etwa 200°C und bei Druck von etwa 300 bis 500 N/cm² im Heizpresszyklus und etwa 500 bis 700 N/cm² im Kaltpresszyklus.

Eine Erzeugung der Kavität, wie in Figur 3 gezeigt, kann besonders bevorzugt wie folgt erzeugt werden:
Die erforderliche Kavität zur Implantation eines Moduls kann nach dem nachfolgend beschriebenen Verfahren ausgestanzt werden. Hierbei darf die Karte nicht auf der gesamten Dicke gestanzt werden, da sonst ein Loch in der Karte entstünde. Wenn hingegen nur ein Teil der Dicke gestanzt wird, so löst sich der herauszunehmende Teil nicht aus der Karte, da dieser auf der Unterseite mit dem Dokument noch verbunden ist. Um dieses zu verhindern, wird nun vor der Lamination eines solchen Dokuments an dieser Stelle eine Trennschicht in den Dokumentenaufbau eingebracht, so dass nach einer Stanzung der entsprechende Teil entfernbar ist, so dass sich eine Kavität zur Implantation eines Moduls ergibt.

Dabei erfolgt der Schichtaufbau aus Folien zunächst wie bekannt, jedoch wird an der Stelle der später gewünschten Kavität, zum Beispiel oberhalb einer eventuell vorhandenen Antenne, eine Trennfolie in passender Größe eingelegt, welche aus einem Material besteht, das sich nicht mit dem Polymer der Folie verbindet, zum Beispiel Aluminium-, Silikon-, Teflon- oder Polyimidfolie, oder eine Folie mit einer speziellen Beschichtung, wobei die Beschichtung so ausgebildet ist, dass sie sich nicht mit den angrenzenden Folien z.B. während eines Laminierprozesses verbindet. In einer anderen Ausführungsform kann eine erfindungsgemäße Trennschicht zum Beispiel drucktechnisch hergestellt werden, zum Beispiel mit Silikonöl-haltigen Tinten. Nach Lamination in üblicher Weise mittels Laminiertechnik in einer Heiz-Kühl-Presse bei einer Temperatur bis zu etwa 200 °C und bei Druck von etwa 300 bis 500 N/cm² im Heizpresszyklus und etwa 500 bis 700 N/cm² im Kaltpresszyklus ergibt sich ein Dokumentenrohling, bei dem die Trennschicht oberhalb der vorhandenen Antenne einlaminiert ist. Wird nun mit einem geeigneten Stanzwerkzeug eine Stanzung vorgenommen, bei der die Größe der Stanzwerkzeuges exakt der Größe der gewünschten Kavität entspricht, kann diese in einfacher Weise herausgestanzt werden.

Die Verfahren des Laminierens und Stanzens sind dem Fachmann auf dem Gebiet wohlvertraut und bedürfen an dieser Stelle keiner weiteren Erörterung.

In einer weiteren Ausführungsform zur Erzeugung von Kavitäten werden die einzelnen Folien vor der Lamination ausgestanzt. Somit ergibt sich beim Zusammentragen der Folien bereits eine Kavität. Diese würde sich jedoch bei der Lamination unter den dort herrschenden Bedingungen (Druck und Temperatur) wenigstens teilweise mit Material auffüllen. Aus diesem Grund müssen die zur Lamination eingesetzten Bleche eine Erhebung von genau der Größe der Kavität aufweisen. Diese Erhebung darf, wenn eine Antenne kontaktiert werden soll, unter keinen Umständen flacher als die Kavität sein, da in diesem Fall bereits eine kleine Menge Polymers sich über die Antenne und die Kontaktflächen legen würde und somit eine erfolgreiche elektrische Kontaktierung des Moduls mit der Antenne verhindern würde.

Für flache Kavitäten (≤100 µm), welche zum Beispiel für extrem flache Inlaymodule genötigt werden, kann auf eine Stanzung der Folien verzichtet werden. Die Kavität wird in diesem Fall allein durch die Erhebung auf dem Laminationsblech erzeugt.

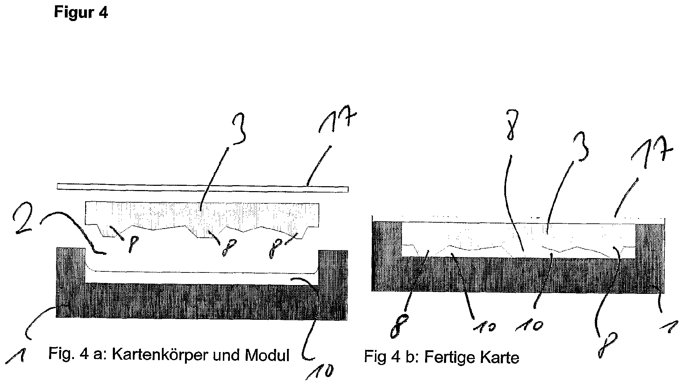

In einer weiteren, nicht zur Erfindung gehörigen Ausführungsform, bei geringer Strukturgröße von 5 bis 100 µm, wird in die Kavität (2) des Kartenrohlings (3) ein Kleber (10) gegeben, in welchen das Display-Modul (3) eingedrückt wird, so dass sich die Erhebungen (8) bei der Aushärtung des Klebers (10) in komplementärer Weise abbilden, wie in Figur 4 dargestellt.
Zusätzlich kann eine Sicherheitsfolie (17) aufgebracht werden.

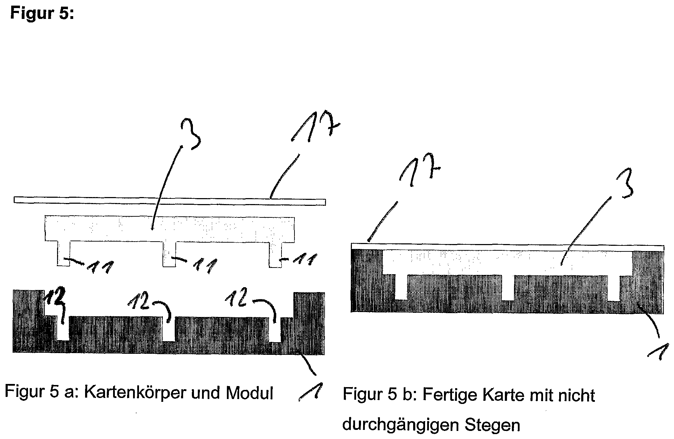

Eine bevorzugte Ausführungsform sieht die Anbringung von Verbindungsstücken an das Display-Modul vor. Es handelt sich dabei um Erhebungen von mehr als 5 µm. Diese beispielsweise zylinderförmigen Erhebungen (11) des Moduls (auch als Stege bezeichnet) greifen formschlüssig in entsprechend negative (komplementäre) Strukturen (12), so dass ein inniger form- und kraftschlüssiger Verbund zwischen Karte (1) und Display-Modul (3) erfolgt, wie in Figur 5 dargestellt. Die Anzahl derartig ausgebildeter Erhebungen ist von Größe und Form des Moduls abhängig. Für kleine Display-Module können bereits zwei Erhebungen ausreichend sein, für größere sind entsprechend mehr vorzusehen. Zylinderförmige Erhebungen sind dabei eine bevorzugte Ausführungsform.
Auch in diesem Fall kann zusätzlich eine Sicherheitsfolie (17) aufgebracht werden.

Zumindest eine Erhebung ist bevorzugt zylinderförmig.

Insbesondere bei sehr kleinen Strukturgrößen können als Modulmaterial bevorzugt flüssigkristalline Polymere eingesetzt werden, welche besonders günstige Eigenschaften für den Spritzguss und das Spritzpressen aufweisen.

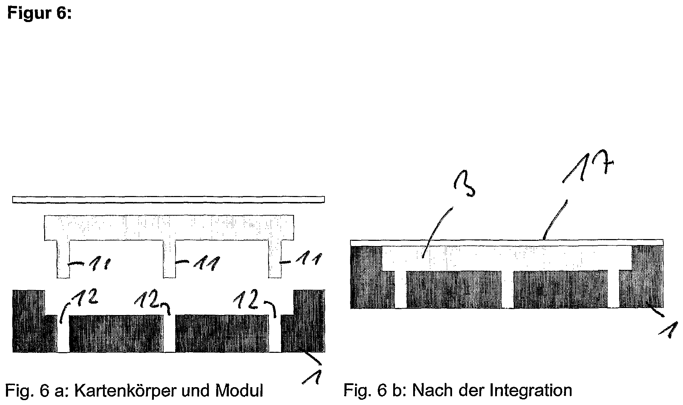

Bevorzugt ist eine Ausführungsform, bei der diese Erhebungen (11) stegartig durch die ganze Dicke des Kartenkörpers (1) reichen, wie in Figur 6 zu sehen.
Zusätzlich kann auch hier eine Sicherheitsfolie (17) aufgebracht werden.

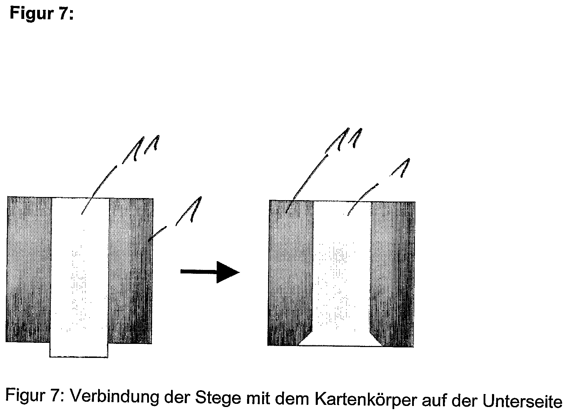

Bei dieser Ausführungsform können die durch die Karte laufenden stegartigen Erhebungen (11) auf der Unterseite der Karte zum Beispiel thermisch oder mittels Ultraschall mit dem Kartenkörper form- oder kraftschlüssig verschmolzen werden, wie in Figur 7 als Ausschnittsvergrößerung dargestellt.

Nach einer vorteilhaften Ausführungsform ist vorgesehen, dass die Unterseite des Display-Moduls (3) ein oder mehrere zylinderförmige Erhebungen (11) aufweist, welche formschlüssig in entsprechende Aussparungen des Kartenkörpers (1) passen und durch den gesamten Kartenkörper (1) reichen.

Gegenstand der Erfindung ist daher auch ein Verfahren zur Herstellung der vorstehend beschriebenen Sicherheits- oder Wertdokumente, dadurch gekennzeichnet, dass Erhebungen auf der Rückseite der Karte bei der Implantation zunächst herausragen und anschließend thermisch oder durch Ultraschall irreversibel mit dem Kartenkörper (1) verbunden werden.

Die stegartigen Erhebungen können auf der Rückseite in das Layout integriert sein, sie können verdeckt sein, zum Beispiel mittels eines metallisierten Hologramm-Patches überdeckt sein, oder sie können als leicht erkennbares Merkmal ein Muster zum Beispiel auf der Dokumentenrückseite bilden. Auch ist eine Ausführung dergestalt denkbar, dass eine Beleuchtung in die stegartigen Erhebungen integriert ist oder dass die Stege aus dem Display-Modul von hinten beleuchtet werden.

Bei Verwendung einer lichtundurchlässigen Abdeckung der stegartigen Erhebungen, zum Beispiel metallisierte oder teilmetallisierte Hologramm-Patches, können auch eingebrachte elektronische Bauteile zusätzlich wirkungsvoll vor Lichteinfall geschützt werden, sowohl vor Umgebungslicht, welches Fehlfunktionen an den ICs hervorrufen und eine beschleunigte Alterung bewirken könnte, als auch vor Licht, welches zu Angriffszwecken eingesetzt wird.

In einer weiteren Ausführungsform enthalten die stegartigen Erhebungen elektrisch funktionale Komponenten, so dass der Chip im Modul eine Manipulation am Modul-Karten-Verbund erkennen kann. Dieses kann beispielhaft über Messung des elektrischen Widerstandes realisiert sein. Intakte Karten haben eine elektrisch geschlossene, möglicherweise über den gezielten Verbund der stegartigen Erhebungen codierte Brücke und einen oder mehrere definierte elektrische Widerstände. Wurde die elektrische Verbindung unterbrochen, so steigt der Widerstand gegen unendlich.

Bevorzugt weisen die Erhebungen mindestens eine elektrisch funktionale Komponente auf, die eine Manipulation des Modul-Karten-Verbundes erkennen kann.

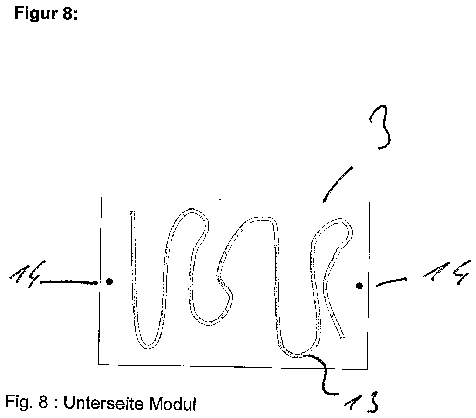

Die unter dem Display-Modul befindliche Struktur kann über den mechanischen Haftverbund weiter als Sicherheitsmerkmal ausgebildet sein. Eine beispielhafte Ausführung ist in Figur 8 dargestellt. Das Display-Modul weist neben der Struktur (13) - in diesem Fall sind Erhebungen als graue Linie dargestellt - zum Beispiel zwei Kontakte oder Elektroden (14) auf. Der flächig aufgetragene Kleber weist nach der Herstellung des Modul-Karten-Verbundes eine definierte dielektrische Eigenschaft auf. Die Kapazität zwischen den Kontakten (14) ist nun eine Funktion der Geometrie der Erhebung (13). Eine Manipulation würde diese Struktur und somit die Kapazität verändern, was vom Modul elektrisch festgestellt werden kann.

Nach einer bevorzugten Ausführungsform, kann die Kapazität des Haftklebers (10) durch zwei Kontakte (14) gemessen werden und zur Manipulationskontrolle ausgewertet werden.

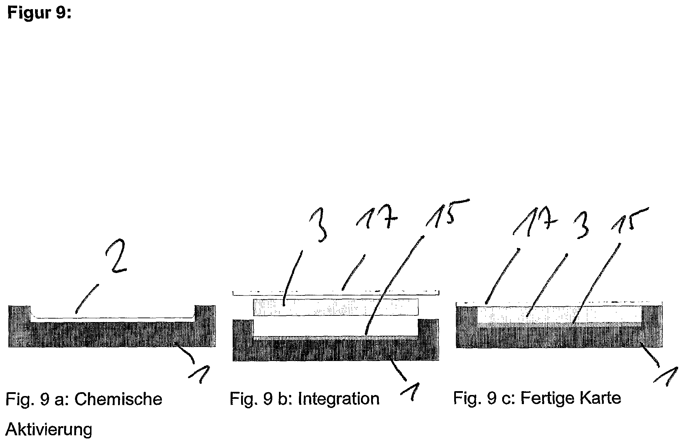

Eine weitere erfindungsgemäße Ausführungsform des Verfahrens für die innige Verbindung von Modul und Karte sieht eine chemische Aktivierung vor. Eine chemische Aktivierung kann im Falle einer PC-Karte (Figur 9a) zum Beispiel mittels Säure erfolgen. Die so chemisch aktivierten Bindungsstellen an der Oberfläche werden mittels zugegebener Komponenten, zum Beispiel Epoxiden, für eine kovalente Bindung funktionalisiert. Mittels eines entsprechenden Klebersystems (15), welches kovalente Bindungen über die aktivierten Zentren auf der PC-Oberfläche ausbilden kann, wird das Modul eingebunden und untrennbar mit dem Dokument verbunden (Figur 9c). Zusätzlich kann eine Sicherheitsfolie (17) aufgebracht werden.

Alternativ zur erfindungsgemäßen Ausführungsform der chemischen Aktivierung kann auch eine Aktivierung der Oberfläche des Kartenkörpers mittels oxidierendem Plasma erfolgen. Beim Plasma entstehen Gase wie O₂*, O₃ und andere, welche auf der Polymeroberfläche Alkohol- und / oder Carbonsäurefunktionen ausbilden. Diese können dann zum Beispiel mit Epoxiden β-Hydroxyether beziehungsweise β-Hydroxyester bilden.

Besonders bevorzugt wird eine Kombination beider oben beschriebener Verfahren verwendet, sowohl eine chemische Aktivierung als auch eine mechanische Befestigung mittels entsprechender stegartiger Erhebungen.

Die genannten Methoden der chemischen Aktivierung bzw. Plasmaaktivierung sind in der Fachliteratur eingehend beschrieben und bedürfen an dieser Stelle keiner weiteren Erläuterung. Der Fachmann auf dem Gebiet kann, ausgehend von der Fachliteratur, optimierte Verfahrensparameter durch einfache Versuche bestimmen.

Aus dem Stand der Technik sind weiter Dokumente bekannt, welche Anzeigeelemente auf beiden Seiten des Dokuments aufweisen (DE 102006030406). Beide Displayelemente können als Module eingebracht werden, wie in den Figuren 10 und 11 dargestellt. Besonders bevorzugt wird bei der Einbringung der Module zwischen den beiden ein elektrischer Kontakt hergestellt, so dass beide Module miteinander kommunizieren. In dieser Ausführungsform benötigt nur ein Modul einen RF-Chip zur Kommunikation mit einem Schreib- und/oder Lesegerät.

In Figur 10 sind die Display-Module so dargestellt, dass die stegartigen Erhebungen (11) beider Module (3) ineinander greifen und so eine nicht trennbare Verbindung herstellen. Der Kartenkörper wird quasi zwischen die Displaymodule geklemmt.

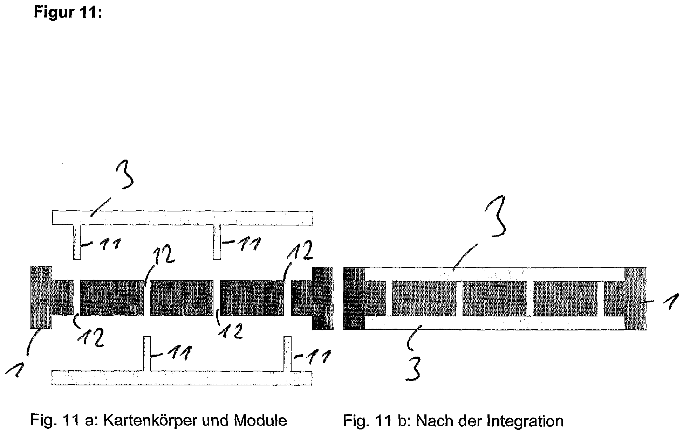

In Figur 11 ist eine Einbringung von zwei Displaymodulen gezeigt, bei der die stegartigen Erhebungen (11) der Module unabhängig voneinander in der oben beschriebenen Weise (nur ein Ausführungsbeispiel hier gezeigt) in den Kartenkörper eingefügt werden.

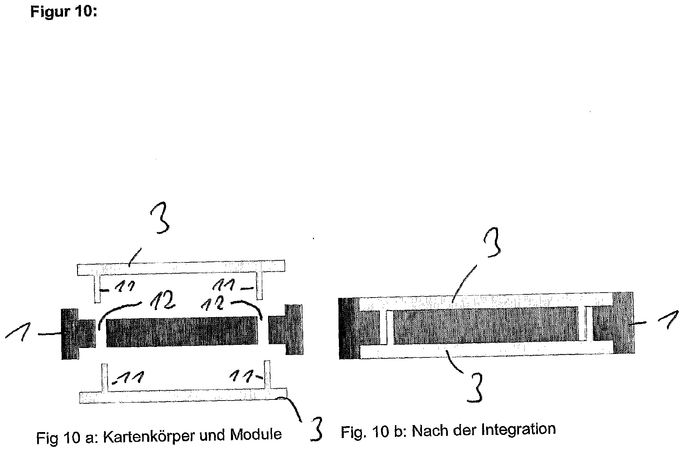

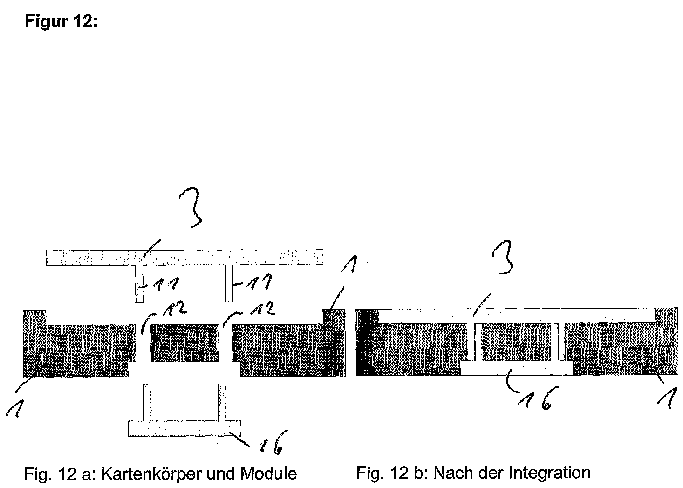

In einer weiteren bevorzugten Ausführungsform werden ein Displaymodul (3) und ein RF-Chipmodul (16) auf gegenüberliegenden Seiten des Dokuments (1) eingebracht, wie in Figur 12 dargestellt. Wie schon bei Figur 10 beschrieben, wird bei der Einbringung der Module ein elektrischer Kontakt hergestellt. In einer bevorzugten Ausführungsform werden beide Seiten mit einer Sicherheitsfolie (17) überdeckt. Hierbei kommen auf der Seite des Chipmoduls bevorzugt metallisierte oder teilmetallisierte Hologramme zum Einsatz, was einen zusätzlichen Schutz des Chips gegenüber Licht ergibt.

Bevorzugt können auf beiden Seiten des Kartenkörpers (1) Displaymodule (3) angeordnet sein.

Vorteilhafterweise sind beide Displaymodule (3) elektrisch miteinander verbunden .

Nach einer weiteren bevorzugten Ausführungsform, ist über dem Displaymodul eine Sicherheitsfolie (17) angebracht.

Über das Display-Modul kann in jedem Fall eine Sicherheitsfolie (17) appliziert werden. Hierbei kann es sich um ein Hologramm, insbesondere ein Volumenhologramm, eine Folie mit UV-Aufdruck oder Aufdruck mit einer optisch variablen Farbe, eine teilmetallisierte Folie oder eine andere aus dem Wert- und Sicherheitsdruck bekannte Folie handeln. Eine solche Folie schützt zum einen das Modul gegen Manipulation, insbesondere Austausch des Display-Moduls und zum anderen können zusätzlich zum Display eingebrachte elektronische Bauteile auf diese Weise besonders wirkungsvoll vor Lichteinfall geschützt werden, insbesondere vor Licht, welches zu Angriffszwecken eingesetzt wird.

Das Aufbringen des Volumenhologramms kann z.B., wie in der DE 10 2006 048 464 beschrieben, erfolgen: Die Karte mit Display wird mit einer thermisch oder durch Photopolymerisiation oder einer kombiniert vernetzbaren Haftvermittlerschicht versehen, z.B. bedruckt. Anschließend erfolgt das Aufbringen des Hologramms bzw. der Sicherheitsfolie.

Die genannte thermisch vernetzbare, feste Haftvermittlerschicht, ist dadurch erhältlich ist, dass
A) eine flüssige Zubereitung bestehend aus
   a) 19,9 - 80 Gew.-% eines mit den Komponenten b), c) und d) copolymerisierbaren und von diesen verschiedenen ethylenisch ungesättigten Monomers ohne eine mit Epoxidgruppen reaktive funktionelle Gruppe, oder einer Mischung verschiedener solcher Monomere
   b) 0,1 - 60,2 Gew.-% eines mit den Komponenten a), c) und d) copolymerisierbaren und von diesen verschiedenen ethylenisch ungesättigten Monomers mit zumindest einer mit Epoxidgruppen reaktiven funktionellen Gruppe, oder einer Mischung verschiedener solcher Monomere,
   c) 0 - 30 Gew.-% eines mit den Komponenten a), b) und d) copolymerisierbaren und von diesen verschiedenen ethylenisch ungesättigten Monomers mit einer Alkyoxygruppe, oder einer Mischung aus verschiedenen solcher Monomere,
   d) 0 - 5 Gew.-% eines mit den Komponenten a), b) und c) copolymerisierbaren und von diesen verschiedenen ethylenisch ungesättigten Monomers mit im Mittel zumindest zwei oder mehr als zwei mit Epoxidgruppen reaktiven funktionellen Gruppen, welches verschieden von der Komponente b) ist, oder einer Mischung aus verschiedenen solcher Monomere,
   e) 19,9 - 80 Gew.-% eines Monomers mit im Mittel zumindest einer Epoxidgruppe, insbesondere mehr als einer, beispielsweise im Mittel zumindest zwei Epoxidgruppen, oder einer Mischung aus verschiedenen solcher Monomere,
   f) 0 - 10 Gew.-% eines Photopolymerisationsinitiators oder mehrerer verschiedener Photopolymerisationsinitiators,
   g) 0 - 10 Gew.-% eines Vernetzungskatalysators oder mehrerer verschiedener Vernetzungskatalysatoren, und
   h) 0 - 15 Gew.-% Zusatzstoffe,
   wobei die Summe der Komponenten a) bis h) stets 100 Gew.-% ergibt,
   als Überzug auf ein Substrat aufgetragen wird, und
B) die Komponenten a) bis d) des in Stufe A) erhaltenen Überzugs durch Bestrahlung mit Licht photopolymerisiert werden. Es wird sich empfehlen, dass dafür zumindest 0,01 Gew.-% der Komponente f) in der Zubereitung enthalten ist. Die Zubereitung weist vorzugsweise eine Viskosität im Bereich von 10 bis 2000 mPa*s, insbesondere 100 bis 1000 mPa*s, beispielsweise 300 bis 700 mPa*s auf, insbesondere gemessen gemäß Beispiel 8.

Die Dicke einer solchen Haftvermittlerschicht (vor oder nach der Photopolymerisation) ist insbesondere kleiner als 5 µm, kleiner als 2 µm, oder kleiner als 1,5 µm.

Die Haftvermittlerschicht wird mittels einer Drucktechnologie, z.B. Offsetdruck, Lettersetdruck, Flexodruck oder Rastertiefdruck auf das Substrat aufgetragen.

Die Komponente a) ist vorzugsweise ein (Meth-)Acrylat, vorzugsweise ein C1-C12-Alkyl-(meth-)acrylat, ein C21-C12-A, oder ein C1-C12-Aralkyl(meth-)acrylat, wobei die Alkylgruppe und/oder Arylgruppe substituiert oder nicht substituiert sein kann. Sie ist insbesondere ausgewählt aus der Gruppe bestehend aus "Methyl-, Ethyl-, Propyl, Butyl-, Octyl-, Isobornyl-, 2-Ethyl-hexyl(meth-)acrylat, Phenyl(meth-)acrylat, Phenyl-C1-C8-alkyl-(meth)-acrylat und Mischungen solcher Monomere".

Die Komponente b) ist vorzugsweise eine (Meth-)Acrylsäure, substituiert oder nicht substituiert, ein C1-C12-Alkyl-(meth-)acrylat, ein C1-C12-Aryl-(meth-)acrylat, oder ein C1-C12-Ar-alkyl-(meth-)acrylat, wobei die Alkylgruppe und/oder Arylgruppe mit zumindest einer mit Epoxidgruppen reaktiven Gruppe, insbesondere Hydroxylgruppe, Carboxylgruppe, Anhydridgruppe, Ketogruppe oder Amingruppe (primär, sekundär oder tertiär) substituiert ist. Sie ist insbesondere ausgewählt aus "(Meth-)Acrylsäure, Hydroxyethyl-, Hydroxypropyl-, Hydroxybutyl-(meth-)acrylat, Carboxethyl-, Carboxypropyl-, Carboxybuthyl-(meth-)acrylat, und Mischungen solcher Monomere".

Die Komponente c) ist vorzugsweise ein methoxyliertes oder ethoxyliertes C1-C12-Alkyl-(meth-)acrylat, C1-C12-Aryl-(meth-)acrylat oder C1-C12-Ar-alkyl-(meth-)acrylat, wobei die Alkylgruppe und/oder Arylgruppe substituiert oder nicht substituiert sein kann. Sie ist insbesondere ausgewählt aus der Gruppe bestehend aus "methoxyliertes Phenyl-(meth-)acrylat, methoxyliertes Phenyl-Methyl-(meth-)Acrylat, methoxyliertes Phenyl-ethyl-(meth-)acrylat, methoxyliertes Phenyl-butyl-(meth-)acrylat, methoxyliertes Phenyl-hexyl-(meth-)acrylat, methoxyliertes Phenyl-octyl-(meth-)acrylat, ethoxyliertes Phenyl-(meth-)acrylat, ethoxyliertes Phenyl-methyl-(meth-)acrylat, ethoxyliertes Phenyl-ethyl-(meth)acrylat, ethoxyliertes Phenyl-butyl-(meth-)Acrylat, ethoxyliertes Phenyl-hexyl-(meth-)acrylat, ethoxyliertes Phenyl-octyl-(meth-)acrylat und Mischungen solcher Monomere".

Die Komponente d) ist vorzugsweise ein (Meth-)Acrylat, beispielsweise ein C1-C12-Alkyl-(meth-)acrylat, ein C1-C12-Aryl-(meth-)acrylat), oder ein C1-C12-Ar-alkyl-(meth-)acrylat, wobei die Alkylgruppe und/oder Arylgruppe mit zwei oder drei Gruppen, gleich oder verschieden, substituiert ist, welche mit Epoxidgruppen reaktiv sind. Bezüglich geeigneter Gruppen wird auf die Ausführungen zur Komponente b) verwiesen. Beispiele geeigneter Produkte sind SR-9003 und SR-415 der Fa. Sartomer sowie Laromer®-DPGDA und Laromer®-LR 8863 der Fa. BASF.

Der Begriff des (Meth-)Acrylates bezeichnet Esler als (Meth-)Acrylsäure. Weitere für die Komponenten a) bis d) einsetzbare Monomere sind beispielsweise der Literaturstelle Ullmann's Encyclopedia of Industrial Chemistry, Wiley-VCH Verlag GmbH & Co. KGaA, 2005, in den Kapiteln "Acrylic Acid and Derivatives" und "Methacrylic Acid and Derivatives" entnehmbar.

Die Komponente e) ist vorzugsweise ein Epoxidharz mit einem Molekulargewicht von zumindest 500 Da, vorzugsweise zumindest 1000 Da, insbesondere zumindest 2000 Da, bis zu 5000 Da und mehr. Der Begriff des "Monomers" der Komponente E) bezieht sich dann auf das gesamte Harzmolekül und nicht etwa auf Monomere, auf welchen das Harz basiert. Die Obergrenze des Molekulargewichtes ist lediglich dadurch bestimmt, dass das Epoxidharz in der eingesetzten Menge vollständig löslich in den anderen Komponenten ist. Es kommen grundsätzlich alle niedermolekulare sowie höhermolekulare Polymere in Frage, wobei sie zweckmäßigerweise im Mittel mehr als eine Epoxidgruppe pro Molekül enthalten. Bevorzugte Epoxide sind Polyglycidylether von cyclischen Polyphenolen, insbesondere von Bisphenol-A oder Bisphenol-F. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali in an sich bekannter Weise hergestellt werden. Beispiele für Polyphenole sind: 2,2-bis (4-hydroxyphenyl-)propan, 1,1-bis (4-hydroxyphenyl-)ethan, 2-Methyl-1,1-bis (4-hydroxyphenyl-)propan, 2,2-bis (4hydroxy-3-tert.-butylphenyl-)propan, bis (2-hydroxynaphtyl-)methan und 1,5-dihydroxy-3-naphthalin. Beispiele für weitere cyclische Polyole sind cycloaliphatische Polyole, wie 1,2-Cyclohexandiol, 1,4-Cyclohexandiol, 1,2-bis(hydroxymethyl-)cyclohexan, 1,3-bis (hydroxymethyl-)cyclohexan, und hydriertes Bisphenol A. Darüber hinaus können oxyalkylierte Addukte wie Ethylen- und Propylenoxidaddukte von diesen alicyclischen Polyolen und Polyphenolen verwendet werden. Weiterhin können als Epoxidharze eingesetzt werden: Polyglycidylether von mehrwertigen Alkoholen, wie beispielsweise Ethylenglykol, Diethylenglykol, Triethylenglykol, 1,2-Propylenglykol, 1,3-Propylenglykol, 1,4-Butylenglykol und 1,5-Pentandiol. Auch Epoxide, die man durch Epoxidierung einer olefinisch ungesättigten alicyclischen Verbindung erhält, sind als Epoxidharze einsetzbar. Derartige Epoxidharze schließen Diepoxide oder höhere Epoxide und deren Mischungen ein, die eine oder mehrere Monoepoxide enthalten. Diese Epoxide werden durch Epoxidierung von alicyclischen Olefinen erhalten, z.B. mit Sauerstoff und ausgewählten Metallkatalysatoren, mit Perverbindungen, wie beispielsweise Perbenzoesäure, mit Acetaldehydmonoperacetat oder Peressigsäure. Beispiele für solche Epoxide sind 1,5-Diepoxycyclooctan und Isomere des Cyclopentadiendioxids. Ebenfalls eingesetzt werden können Epoxidharze, die durch partielle Epoxidierung von Polydienen und deren Copolymerisaten hergestellt sind. Beispiele sind teilepoxidiertes Polybutadien und Polyisopren. Weitere einsetzbare Epoxidharze sind Polygylcidylether von phenolischen Novolakharzen oder ähnlichen Phenolharzen. Geeignete Epoxidharze sind beispielsweise die unter folgenden Namen im Handel erhältlichen Produkte: Epon, Eponol, Eponex, Epi-Cure, Epikote (alle Resolution Performance Products), D.E.R., D.E.N., D.E.H., Derakane, E.R.L. (alle Dow Chemical), Araldite, Aralcast (beide Hunstman Advanced Materials), E-potuf (Reichhold Chemical), NPEL, NPES (beide Nan Ya), YD (Kukdo Chemical), Epiclon (Dainippon Ink & Chemical), Epotohto (Tohto Kasei), Epikote (Japan Epoxy Resin), Epilox (Leuna Harze), A.E.R. (Asahi Kasei), Eponik (Mitsui Chemical), Sumiepoxy (Sumimoto Chemical), Epotec (Thai Epoxy), Paphen (InChem), PEP (Pacific Epoxy Polymers) oder Erysis, Epalloy (CVC Speciality Chemicals).

Die Komponente e) ist zweckmäßigerweise in einer Mischung der Komponenten a) bis d) vollständig löslich. Hierzu können die Verhältnisse der Mengen der Komponenten a) bis d) einerseits und der Komponente e) andererseits entsprechend abgestimmt werden.

Die Komponente f) ist vorzugsweise ausgewählt aus der Gruppe bestehend aus "Benzophenone wie Benzophenon, Benzoylbenzylsäure, 4-Phenylbenzophenon, Hydroxybenzophenon, Benzoin, Benzoin-C1-C4-alkyl-ether wie Benzoin-ethyl-ether, Benzoin-isopropyl-ether, Benzoinbutyl-ether, Benzoin-isobutyl-ether, Acetophenon, Acetophenon-Derivate, Thioxanthone, Alkylanthraquinone, Phosphinoxide oder eine Mischung solcher Substanzen". Geeignete Photoinitiatoren sind beispielsweise die unter folgenden Namen im Handel erhältlichen Produkte Darocure® und Irgacure® (beide Ciba).

Die Komponente g) ist vorzugsweise ausgewählt aus der Gruppe bestehend aus "2-Methylimidazol, Phenylimidazol, 2-Phenyl-4-methylimidazol, bis(2-ethyl-4-methylimidazol), 2-Phenyl-4-methyl-5-hydroxymethylimidazol, 2-Phenyl-4,5-dihydroxymethylimidazol, Triazinadditions-Imidazol, 2-Ethyl-4-methylimidazol, 2-Undecylimidazol, 1-Cyanoethyl-2-methylimidazol, 1-Cyanoethyl-2-phenylimidazol, 1-Cyanoethyl-2-ethyl-4-methylimidazol, 1-Aminoethyl-2-methylimidazol, 1-(Cyanoethylaminoethyl)-2-methylimidazol, 1-Cyanoethyl-2-phenyl-4,5-bis(cyanoethoxymethyl)imidazol, Epoxidaddukte, mikroverkapselte Vernetzungskatalysatoren und Mischungen solcher Substanzen.

Die Komponente h) kann grundsätzlich alle in der Lackchemie bekannten Additive bzw. Mischungen von Additiven umfassen. Sie ist beispielsweise ausgewählt aus der Gruppe bestehend aus "Antischaummittel, Netzmittel, Oberflächen- und Rheologie-Additive, Trockner, Konservierungsmittel, Stabilisatoren, Korrosionsschutzmittel, Farbstoffe, Pigmente mit einem Partikeldurchmesser kleiner als 5 µm, insbesondere kleiner als 2 µm, und Mischungen solcher Stoffe". Geeignete Vernetzungskatalysatoren sind beispielsweise die unter folgenden Namen im Handel erhältlichen Produkte. Antischaummittel: Byk-020, Byk-052 der Fa. Byk; Netzmittel: Baysilone der Fa. Bayer, Byk-306, Byk-310 der Fa. Byk; Konservierungsmittel: Borchers S1 der Fa. Borchers. Die Komponente h) ist vorzugsweise frei von nicht reaktiven organischen Lösemitteln. Weitere Additive sind beispielsweise in der Literaturstelle Ullmann's Encyclopedia of Industrial Chemistry, Wiley Verlag, elektronische Ausgabe 2006, in dem Kapitel "Paint Additives" beschrieben.

Im Hinblick auf die mengenmäßigen Verhältnisse ist es bevorzugt, wenn die flüssige Zubereitung besteht aus:
30 - 80 Gew.-%, insbesondere 50 - 80 Gew.-% a),
0,1 - 40 Gew.-%, insbesondere 15 - 30 Gew.-% b),
0 - 15 Gew.-%, insbesondere 0,1 - 15 Gew.-% c),
0 - 1 Gew.-%, insbesondere 0,1 - 1,0 Gew.-% d),
30 - 80 Gew.-%, insbesondere 30 - 50 Gew.-% e),
0,1 - 6,0 Gew.-%, insbesondere 1,0 - 6,0 Gew.% f),
0,1 - 3,0 Gew.-%, insbesondere 0,5 - 3,0 Gew.-% g),
0,1 - 10,0 Gew.-%, insbesondere 0,1 - 5,0 Gew.-% h).

Die Chemie der Zusammenhänge einer bevorzugt verwendeten Haftvermittlerschicht ist die folgende: Bei niedrigen Temperaturen reagieren die Epoxidgruppen der Komponente e) nicht mit den Epoxid-reaktiven Gruppen der ethylenisch ungesättigten Monomere, die solche Gruppen enthalten. Wird die Zubereitung mit Licht, insbesondere UV-Licht, ausreichender Bestrahlungsintensität bestrahlt, so copolymerisieren die Komponenten a) bis d) miteinander. Die insofern "getrocknete" Beschichtung enthält im Falle der Acrylatmonomore folglich Polyacylatmoleküle mit Epoxid-reaktiven Gruppen und das Epoxidharz, wobei zwischen diesen beiden Molekülspezies (noch) keine nennenswerte Reaktion stattgefunden hat. Aufgrund der Polymerisation der Komponenten a) bis d) und der weitgehenden Abwesenheit von nicht-reaktiven Lösemitteln ist aus der flüssigen Zubereitung durch die Photopolymerisation der Acrylatmonomere ein fester Überzug bzw. eine feste Beschichtung enstanden. Diese Beschichtung hat bei niedrigen Temperaturen keine besondere Adhäsionskraft. Wenn diese Beschichtung jedoch erhöhten Temperaturen ausgesetzt wird, schmilzt diese auf und die thermische Vernetzung unter Reaktion der Epoxid-reaktiven Gruppen der Polyacrylatmoleküle mit den Epoxidgruppen des Epoxidharzes findet statt, wobei im Zuge der thermischen Vernetzung eine beachtliche Klebekraft bzw. Haftstärke erreicht wird. Diese beträgt mehr als 1 N/m, meist sogar mehr als 3 N/m.

Mit der genannten Zubereitung wird erreicht, dass die Aufbringung der Haftvermittlerschicht im Offset-, Letterset-, Flexo - oder Rastertiefdruck-Verfahren stattfinden kann, welches deutlich höhere Ansprüche an die Rezeptur stellt als eine Aufbringung via Siebdruck, Rakeln oder Imprägnieren. Die Drucktechnologien Offsetdruck, Lettersetdruck, Flexodruck und Rastertiefdruck erlauben es, dünne Schichten schnell und präzise zu applizieren. Dies stellt wiederum höhere Ansprüche an das zu verdruckende Material hinsichtlich Füllstoffe (Partikel < 5 µm) sowie rheologischer Eigenschaften wie Viskosität, Tack und der sogenannten "Farbaufspaltung" dar. All diesen Anforderungen genügt die erfindungsgemäße Haftvermittlerschicht.

Bei der vorliegenden Erfindung eignen sich besonders vorteilhaft zum Erkennen von Manipulationen Ausführungen, bei denen sich die Folie (17) nicht nur über das Displaymodul, sondern zumindest auch über den benachbarten Bereich des Kartenkörpers, bevorzugt über den ganzen Kartenkörper, erstreckt. Weiterhin vorteilhaft sind Ausführungen der Folie, die personalisierte Informationen enthalten. Die Personalisierungsinformation kann dann z.B. so aufgebracht sein, dass sich ein Teil dieser Information auf dem eigentlichen Kartenkörper, ein anderer Teil auf dem Displaymodul befindet. Manipulationen sind dann an der beschädigten Personaliserungsinformation erkennbar. Besonders vorteilhaft sind Ausführungen, die sich maschinell prüfen lassen, so dass Manipulationen zuverlässig durch z.B. sich an Grenzkontrollstationen befindliche Dokumentenprüfgeräte überprüfen lassen.

Als Alternative zu personalisierten Folien bieten sich auch klassische Merkmale des Sicherheitsdrucks an, z.B. feine Guillochen, Verwendung von Negativ-Guillochen, usw. Manipulationen erkennt man hier daran, dass es einem Fälscher äußerst schwierig sein wird, ein anderes Displaymodul derart einzubauen, dass sich eine registergenaue Übereinstimmung der Guillochen ergibt.

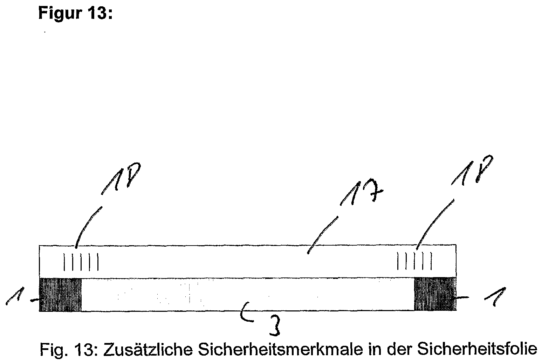

Besonders bevorzugt weist eine solche Folie (17) Linienstrukturen, Sollbruchstellen oder ähnliche Sicherheitsmerkmale (18), insbesondere im Randbereich des Moduls auf, wie in Figur 13 dargestellt. Auf diese Weise wird das Modul besonders gegen Manipulation, insbesondere gegen Austausch, geschützt.

Zusätzlich werden besonders bevorzugt weitere prinzipiell bekannte Elemente in der Sicherheitsfolie eingesetzt. Hierdurch ergibt sich eine weitere Verbesserung der Verbindung zwischen Dokument und Modul.

## Patentansprüche

1. Sicherheits- oder Wertdokument enthaltend mindestens einen Kartenkörper (1) bestehend aus mindestens einem Kunststoff mit Erweichungstemperatur größer als 100 °C und mindestens ein eingebettetes Displaymodul (3), **dadurch gekennzeichnet, dass** das Displaymodul (3) auf der Unterseite eine Struktur in Form von mehreren Erhebungen (8) mit einer Höhe (d) von mindestens 3 µm aufweist und dass eine Struktur im Kartenkörper (1) vorhanden ist, welche komplementär zur Struktur des Displaymoduls (3) ist.

2. Sicherheits- oder Wertdokument gemäß Anspruch 1, **dadurch gekennzeichnet, dass** der Kartenkörper (1) ein oder mehrere Lagen aus thermoplastisch verarbeitbaren Kunststoffen enthält, wobei der thermoplastisch verarbeitbare Kunststoff Polycarbonat, Polyethylenterephthalat und dessen Derivate, thermoplastisches Polyurethan, Polyvinylchlorid, Acrylnitril-Butadien-Styrol, oder Verbundmaterialien enthält.

3. Sicherheits- oder Wertdokument gemäß Anspruch 1 oder 2, **dadurch gekennzeichnet, dass** das Display-Modul (3) mittels eines Haftklebers (10) mit dem Kartenkörper (1) verbunden ist.

4. Sicherheits- oder Wertdokument gemäß Anspruch 1, **dadurch gekennzeichnet, dass** mindestens eine Erhebung (11) zylinderförmig ist.

5. Sicherheits- oder Wertdokument nach Anspruch 4, **dadurch gekennzeichnet, dass** die Unterseite des Displaymoduls (3) mehrere zylinderförmige Erhebungen (11) aufweist, welche formschlüssig in entsprechende Aussparungen des Kartenkörpers (1) passen und durch den gesamten Kartenkörper (1) reichen.

6. Sicherheits- oder Wertdokument gemäß mindestens einem der Ansprüche 1 bis 5, **dadurch gekennzeichnet, dass** die Erhebungen (11) mindestens eine elektrisch funktionale Komponente aufweisen, die eine Manipulation des Modul-Karten-Verbundes erkennt.

7. Sicherheits- oder Wertdokument gemäß Anspruch 3, **dadurch gekennzeichnet, dass** zwei Kontakte (14) zur Messung der Kapazität des Haftklebers (10) vorgesehen sind, und die Kapazität zur Manipulationskontrolle ausgewertet wird.

8. Sicherheits- oder Wertdokument gemäß mindestens einem der Ansprüche 1 bis 5, **dadurch gekennzeichnet, dass** auf beiden Seiten des Kartenkörpers (1) Displaymodule (3) angeordnet sind.

9. Sicherheits- oder Wertdokument gemäß Anspruch 8, **dadurch gekennzeichnet, dass** beide Displaymodule (3) elektrisch miteinander verbunden sind.

10. Sicherheits- oder Wertdokument gemäß mindestens einem der Ansprüche 1 bis 9, **dadurch gekennzeichnet, dass** über dem Displaymodul (8) eine Sicherheitsfolie (17) angebracht ist und vorzugsweise die Sicherheitsfolie (17) mindestens ein weiteres Sicherheitsmerkmal enthält.

11. Sicherheits- oder Wertdokument gemäß Anspruch 10, **dadurch gekennzeichnet, dass** das weitere Sicherheitsmerkmal ausgewählt ist aus:
- Hologramm, insbesondere Volumenhologramm,
- UV-Aufdruck,
- Aufdruck mit einer optisch variablen Farbe,
- eine teilmetallisierte Folie,
- Guillochen,
- Linienstrukturen
- Sollbruchstellen.

12. Sicherheits- oder Wertdokument gemäß Anspruch 10, **dadurch gekennzeichnet, dass** sich die Sicherheitsfolie (17) über das Display-Modul hinaus zumindest über einen Teil des Kartenkörpers erstreckt.

13. Sicherheits- oder Wertdokument gemäß Anspruch 12, **dadurch gekennzeichnet, dass** die Sicherheitsfolie (17) personalisierte Informationen enthält.

14. Verfahren zur Herstellung von Sicherheits- oder Wertdokumenten gemäß Anspruch 5, **dadurch gekennzeichnet, dass** der Kartenkörper (1) und das Displaymodul (3) miteinander gefügt werden mit der Maßgabe, dass die Erhebungen (11) durch den gesamten Kartenkörper (1) reichen, wodurch die Erhebungen (11) des Displaymoduls (3) auf der Rückseite des Kartenkörpers (1) bei der Implantation zunächst herausragen und dass die Erhebungen (11) anschließend thermisch oder durch Ultraschall irreversibel mit dem Kartenkörper (1) verbunden werden.

15. Verfahren zur Herstellung eines Sicherheits- oder Wertdokumentes gemäß mindestens einem der Ansprüche 1 bis 5, **dadurch gekennzeichnet, dass** ein mit einer komplementären Struktur versehener Kartenkörper (1) zunächst an den vorgegebenen Stellen mittels Säure chemisch aktiviert wird und anschließend für eine chemische Verbindung funktionalisiert wird oder mit einem oxidierenden Plasma aktiviert wird und dann mittels eines Klebersystems, vorzugsweise Epoxide enthaltend, kovalente Bindungen zum Display-Modul aufgebaut werden.

## Claims

1. A security document or document of value comprising at least one card body (1) consisting of at least one type of plastic material which has a softening temperature of above 100 °C, and of at least one display module (3) embedded therein, **characterised in that**, formed on its bottom surface, said display module (3) has a structure in the form of a plurality of raised portions (8) having a height (d) of at least 3 µm, and **in that** a structure complementary to the structure of the display module (3) is provided in the card body (1).

2. The security document or document of value as claimed in claim 1, **characterised in that** the card body (1) contains one or several layers made of plastic materials that can be processed by thermoplastic methods, said plastic material being processable by thermoplastic methods containing polycarbonate, polyethylene terephthalate and its derivatives, thermoplastic polyurethane, polyvinyl chloride, acrylonitrile butadiene styrene or composites.

3. The security document or document of value as claimed in claim 1 or 2, **characterised in that** the display module (3) is connected to the card body (1) by means of a pressure-sensitive adhesive (10).

4. The security document or document of value as claimed in claim 1, **characterised in that** at least one raised portion (11) is cylindrical in shape.

5. The security document or document of value as claimed in claim 4, **characterised in that** the bottom surface of the display module (3) has a plurality of cylinder-shaped, raised portions (11) which engage in a form-fitting manner with corresponding recesses formed in the card body (1) and extend through the entire card body (1).

6. The security document or document of value as claimed in any one of claims 1 to 5, **characterised in that** the raised portions (11) have at least one electrically functional component capable of detecting any tampering of the module/card composite.

7. The security document or document of value as claimed in claim 3, **characterised in that** two contacts (14) for measuring the capacitance of the pressure-sensitive adhesive (10) are provided and **in that** the capacitance is evaluated for purposes of tampering control.

8. The security document or document of value as claimed in any one of claims 1 to 5, **characterised in that** display modules (3) are disposed on both sides of the card body (1).

9. The security document or document of value as claimed in claim 8, **characterised in that** the two display modules (3) are electrically interconnected.

10. The security document or document of value as claimed in any one of claims 1 to 9, **characterised in that** a security film (17) is affixed on top of the display module (8) and **in that** preferably the security film (17) contains at least one further security feature.

11. The security document or document of value as claimed in claim 10, **characterised in that** said further security feature is selected from among:
- a hologram, in particular a volume hologram,
- a UV imprint,
- an imprint having an optically variable colour,
- a partially metallised film,
- guilloches,
- line structures,
- breaking points.

12. The security document or document of value as claimed in claim 10, **characterised in that** the security film (17) extends beyond the display module and over part of the card body.

13. The security document or document of value as claimed in claim 12, **characterised in that** the security film (17) contains personalised information.

14. A method of manufacturing security documents or documents of value as claimed in claim 5, **characterised in that** the card body (1) and the display module (3) are joined together in such a manner that the raised portions (11) extend through the entire card body (1), so that upon their implantation the raised portions (11) of the display module (3) will first protrude from the rear side of the card body (1), and that subsequently the raised portions (11) will be irreversibly connected to the card body (1) by thermal treatment or by means of ultrasound.

15. The method of manufacturing a security document or document of value as claimed in at least one of claims 1 to 5, **characterised in that** a card body (1) provided with a complementary structure will first be chemically activated at the predetermined spots using an acid and subsequently functionalised for building a chemical compound, or will be activated by means of oxidising plasma whereupon covalent bonds with the display module are created using an adhesive system preferably containing epoxides.

## Revendications

1. Document de sécurité ou de valeur comportant au moins un corps de carte (1) constitué en au moins une matière plastique avec une température de ramollissement supérieure à 100 °C et au moins un module d'affichage (3) incorporé, **caractérisé en ce que** le module d'affichage (3) présente, sur la face inférieure, une structure sous forme de plusieurs saillies (8) d'une hauteur (d) d'au moins 3 µm, et **en ce que** dans le corps de carte (1) est prévue une structure qui est complémentaire à la structure du module d'affichage (3).

2. Document de sécurité ou de valeur selon la revendication 1, **caractérisé en ce que** le corps de carte (1) comporte une ou plusieurs couches en matières plastiques façonnables par voie thermoplastique, la matière plastique façonnable par voie thermoplastique contenant du polycarbonate, du polyéthylène-téréphtalate et ses dérivés, du polyuréthane thermoplastique, du chlorure de polyvinyle, de l'acrylonitrile-butadiène-styrène, ou des matériaux composites.

3. Document de sécurité ou de valeur selon la revendication 1 ou 2, **caractérisé en ce que** le module d'affichage (3) est assemblé au corps de carte (1) au moyen d'une colle de contact (10).

4. Document de sécurité ou de valeur selon la revendication 1, **caractérisé en ce qu'**au moins une saillie (11) est de forme cylindrique.

5. Document de sécurité ou de valeur selon la revendication 4, **caractérisé en ce que** la face inférieure du module d'affichage (3) présente plusieurs saillies (11) de forme cylindrique, lesquelles entrent par conjugaison de forme dans des évidements correspondants du corps de carte (1) et traversent l'ensemble dudit corps de carte (1).

6. Document de sécurité ou de valeur selon au moins l'une quelconque des revendications 1 à 5, **caractérisé en ce que** les saillies (11) présentent au moins un composant fonctionnel du point de vue électrique, lequel reconnaît une manipulation du composite module-carte.

7. Document de sécurité ou de valeur selon la revendication 3, **caractérisé en ce qu'**il est prévu deux contacts (14) en vue de mesurer la capacité de la colle de contact (10), et que ladite capacité est évaluée en vue du contrôle anti-manipulation.

8. Document de sécurité ou de valeur selon au moins l'une quelconque des revendications 1 à 5, **caractérisé en ce que** des modules d'affichage (3) sont disposés sur les deux faces du corps de carte (1) .

9. Document de sécurité ou de valeur selon la revendication 8, **caractérisé en ce que** les deux modules d'affichage (3) sont reliés électriquement l'un à l'autre.

10. Document de sécurité ou de valeur selon au moins l'une quelconque des revendications 1 à 9, **caractérisé en ce qu'**un film de sécurité (17) est appliqué sur le module d'affichage (8) et que de préférence le film de sécurité (17) contient au moins une autre caractéristique de sécurité.

11. Document de sécurité ou de valeur selon la revendication 10, **caractérisé en ce que** l'autre caractéristique de sécurité est au choix :
- un hologramme, en particulier un hologramme de volume,
- une impression UV,
- une impression avec une couleur optiquement variable,
- un film partiellement métallisé,
- des guillochés,
- des structures de lignes,
- des points de rupture intentionnellement prévus.

12. Document de sécurité ou de valeur selon la revendication 10, **caractérisé en ce que** le film de sécurité (17) s'étend par-dessus le module d'affichage et, au-delà de celui-ci, jusque sur au moins une partie du corps de carte.

13. Document de sécurité ou de valeur selon la revendication 12, **caractérisé en ce que** le film de sécurité (17) contient des informations personnalisées.

14. Procédé destiné à fabriquer des documents de sécurité ou de valeur selon la revendication 5, **caractérisé en ce que** le corps de carte (1) et le module d'affichage (3) sont unis l'un à l'autre, et ce de telle sorte que les saillies (11) traversent l'ensemble du corps de carte (1), ce qui fait que les saillies (11) du module d'affichage (3) ressortent, lors de l'implantation, d'abord sur la face arrière du corps de carte (1), et **en ce que** lesdites saillies (11) sont ensuite assemblées de manière irréversible au corps de carte (1) par voie thermique ou par ultrasons.

15. Procédé destiné à fabriquer un document de sécurité ou de valeur selon au moins une quelconque des revendications 1 à 5, **caractérisé en ce qu'**un corps de carte (1) pourvu d'une structure complémentaire est d'abord activé chimiquement au moyen d'un acide au niveau des points prédéfinis et est ensuite fonctionnalisé en vue d'obtenir une liaison chimique, ou est activé avec un plasma oxydant, et **en ce qu'**ensuite des liaisons covalentes sont formées avec le module d'affichage au moyen d'un système de colle contenant de préférence des époxydes.
